# EUROPEAN PATENT SPECIFICATION

(11) **EP 0 806 537 B1**
(45) Date of publication and mention of the grant of the patent: **07.09.2005**
(21) Application number: 96900327.6
(22) Date of filing: 17.01.1996
(51) Int. Cl.: E05F 15/10, H02H 7/085

(54) **SYSTEM FOR DETERMINING THE POSITION IN AUTOMATIC DOORS**
SYSTEM ZUR ERMITTLUNG DER POSITION VON AUTOMATISCHEN TÜREN
SYSTEME PERMETTANT DE DETERMINER LA POSITION DE PORTES AUTOMATIQUES

(30) Priority: 26.09.1995 ES 9501853
(43) Date of publication of application: 12.11.1997
(73) Proprietor: Faiveley Espanola, S.A., 43080 Tarragona (ES)
(72) Inventor: BOJ CABISTAN, Victor, Juan, E-43080 Tarragona (ES)
(74) Representative: Carpintero Lopez, Francisco
(86) International application number: PCT/ES1996/000007
(87) International publication number: WO 1997/012107

## Description

### OBJECT OF THE INVENTION

This invention refers, according to what is set out in this specification, to a system for determining the position of automatic doors, and has the aim of controlling the speed at which automatic doors advance and/or are withdrawn, and therefore of controlling the manoeuvres of opening and closing, being generally applicable to all types of doors and particularly to those used in railway carriages.

### BACKGROUND OF THE INVENTION

The systems currently used to determine the position of automatic doors, such as those installed in railway carriages or buses, use devices such as end of run detectors, axes with levers, encoders, etc., for their working, these elements requiring a large quantity of wiring for their electrical installations, making them expensive and difficult to install.

On the one hand, the traditional systems which make use of end of run detectors, as well as needing a large quantity of wiring and a fairly complex installation, also present, as do systems making use of axes with levers, an additional problem which is highly important in terms of their conservation, this being that they require the greatest amount of supervision and maintenance of any of these systems, including for example the greasing of the axis, the adjustment of end of run devices, calibration, checking, etc..., all of which tasks have the effect over the long term of increasing the expense of maintenance considerably, as well as that corresponding to installation itself.

In the particular case of the encoders, these devices have the advantage of making it possible to determine the position of the door at all times with a high degree of exactitude, as they are of the type used for controlling the position of all types of machine tools, and if used for controlling the position of a door, they treat this as if it were a machine, although in this case of control less exactitude is required, and also the encoders are expensive items and special care has to be taken with their wiring, as these signals are easily distorted.

The european patent EP-328838, reveal a control device for a dc motor supplied with power by a voltage generator through a line having a given resistance, in which is inserted one relay controlling the motor. The control device comprises an auxiliary resistor in series with the motor, means for shorting said resistor, means for measurement the magnitude of the current which then passes through the auxiliary resistor , and the voltage in the supply line of the motor, means for calculating the sum of the resistance of the line and the internal resistance of the motor from values measured for the magnitude of the current and the voltage, and means for automatically and continuously determining the instantaneous value, either of the speed or of the speed and torque of the motor.

Although in this control device, the measurement of the voltage and current in the circuit is carried out, this measurements are taken in a different way than in the present invention and for a different purpose, this measurements being processed subsecuently by different means.

The U.S-5.321.343 patent describes a digital motor control system, for controlling energization of one or more dc motors, with ac power. The system includes digital processor means, digitally generating plural paralell control loops each controlling a selected motor parameter, in response to an associated parameter signal.

The digital control system is implemented with transputers, which is a digital processor with a limited number of registers and minimum set of instrucctions.

The teaching of this patent is far out of the scope of the present invention.

### DESCRIPTION OF THE INVENTION

The system for determining the position of automatic doors proposed by this invention has been designed to resolve the above - mentioned problems in a fully satisfactory way. This system is based on the adjustment characteristics offered by a direct current motor using the equation which compares applied voltage with counterelectromotive force and losses due to the Joule effect.

It is easy to regulate the angular speed of the DC motor, which is translated into the speed with which doors are moved, without having to do more than act on the current applied to the same. What is more, any force which is opposed to movement, will give rise to an increase in the resistance torque and therefore also to a corresponding increase in the current absorbed by the DC motor, as these two magnitudes are proportional.

Therefore, to determine the position of automatic doors and control their working, the system which is proposed includes the means for reading the voltage applied to the motor for one or both directions of turning, and also the current which circulates in its windings. These readings are transformed, by means of a suitable converter, into signals which can be used by a microcontroller, the purpose of which is to detect and correct, if necessary, the readings from the DC motor, comparing them with order values that have been programmed in beforehand, and then, depending on the results of this, acting on the DC motor so that it acts on the door according to a sequence that has been preset according to the application.

Readings of the voltage and current parameters, respectively, are taken by a voltage divider and resistance in series, the data then being introduced into the microcontroller through analogue - digital converters, by which and under the control of a programme prerecorded in the microcontroller, to set how the latter is to act on the direct current motor.

All of this is used, as well as for stopping or changing the speed of the motor, to calculate the approximate position of the door moved by the DC motor at all times, thereby allowing wiring to be simplified, eliminating end of run devices except the one corresponding to the door when closed, for safety reasons and also to verify the calculations of position.

Thus at each moment there is knowledge of the voltage being applied to the DC motor, as well as of the current circulating through its windings, the parameters corresponding to which are used to perform an integration calculation of the position. The calculation is approximate due to the fact that although the action of the microcontroller set by the programme is fixed, the characteristics of different DC motors, in terms of magnetisation, for example, may differ, as may those electronic components used for reading voltage and current, and which in practice have a certain degree of tolerance. Nevertheless, the percentage of error does not influence the actions on the system as a whole on the door, given that this self - corrects by learning from each particular situation. It is due to this that it is possible to move doors at maximum speed, detecting the zone through which it will move using electricity and low current by the programme, and the stoppage zone by overcurrent, sending in the latter case the order to stop to the DC motor.

### DESCRIPTION OF THE DRAWINGS

To complement this description, and with the aim of helping towards better understanding of the invention, this specification is accompanied, as an integral part of the same, by a set of drawings which, as an illustration and not in a restrictive sense, show the following:
Figure 1.- This shows a block diagramme of the system used to determine the position of automatic doors according to this invention.
Figure 2.- This shows the basic form of the direct current motor, showing the points and elements used to read the parameters of voltage and current in the motor.
Figure 3.- This shows three possible curves of speed / time designed by the programme for the process of opening a door.
Figure 4.- This shows three possible curves of speed / time designed by the programme for the process of closing a door.

### PREFERENTIAL EMBODIMENT OF THE INVENTION

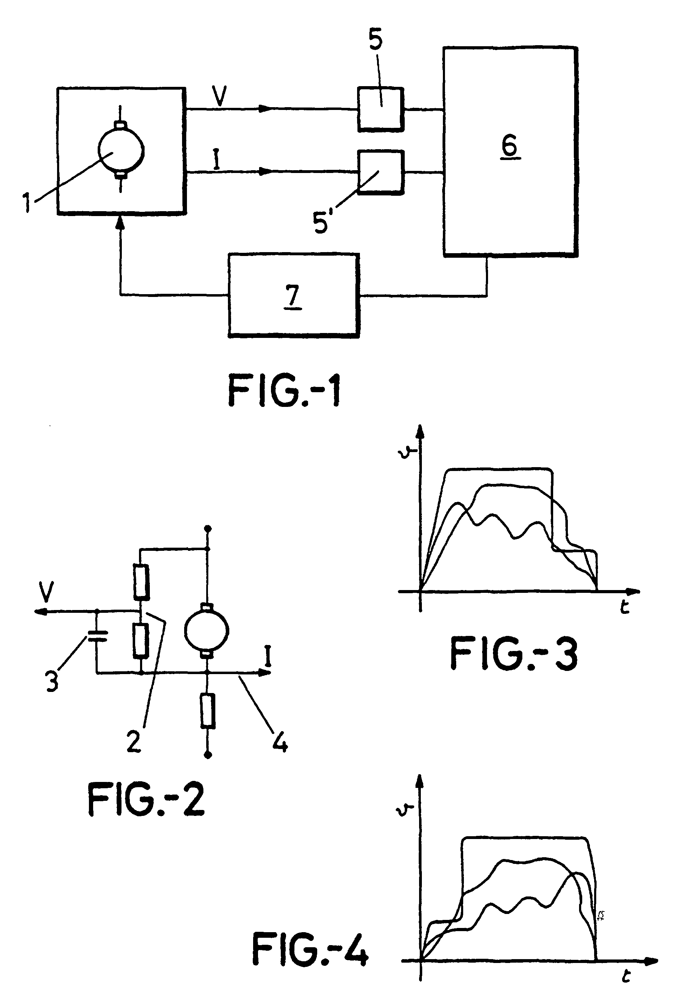

In the light of these figures, it may be seen that the proposed system for determining the position or automatic doors is composed of the functional association of the means for reading voltage and current in a direct current motor (1), which as shown in figure 2 consists of a voltage divider (2) associated with a low-pass filter (3) and a shunt circuit (4) after which two analogue signals are generated which, by analogue / digital converters (5), (5') they are transformed into digital signals, to be compared and processed by a microcontroller (6) which, by means of a program, calculates position according to the variables as read, after which it sends the orders for working to the motor control (7).

The output signals of the converters (5) are proportional to the speed of the motor. The microcontroller (6) carries out the integration of the same, obtaining the position at each instant, which is stored in certain records of position. The contents of these records is compared with the order values set by the program, in such a way that when the information contained in the calculation records coincides with those of the orders, different actions are brought about; opening, closing, changing speed, stoppage, etc. The program also makes it possible in each case to correct the values obtained, depending on the particular characteristics of each motor, although when the system lacks voltage it is initialised with the theoretical values.

Internally, the microcontroller (6) carries out all of the calculations, abandoning natural physical units and using units which simplify the calculations using mathematical operations, thereby reducing the time during which the microcontroller (6) is occupied, the length of the program, etc. ...

As an example of working, a situation in which the previous situation is unknown may be imagined, for example when turning the voltage on for the motor. In this case, the microcontroller (6) will read the order which it has in this state, which could be that to close, and with which it will initiate the manoeuvre at slow speed, although logically if the door is together then it will recognise that it is closed; if this is not the case, it will continue closing until the end of the run of the door is reached, closed and locked, after which the normal manoeuvre is initiated.

If the order is given to open, then this manoeuvre is initiated at slow speed until such a moment that overcurrent is detected due to the door having reached the end of its run, which the microcontroller (6) interprets as the door being open, although an error signal is still produced, this disappearing when the subsequent closure is brought about, the door being closed and joined. Following this moment, the opening and closing of the door is carried out in normal fashion.

The two forms of working mentioned above also arise if, during the motion of opening as well as that of closing, the door encounters an obstacle, such as a person or object. When this circumstance arises the microcontroller (6) recognises it and acts according to the programmed working criteria, until such point as the door reaches the end of its run, an error signal being activated if once a certain period of time has passed the said position is not reached.

Definitively, the proposed system makes it possible to fully control a door by calculating its position at each moment on the basis of the voltage applied to the DC motor and the current circulating in the same, in particular at those moments when there is an increase in the latter (overcurrent). The characteristics of the opening and closing of the door, as shown in figures 3 and 4, may be designed as wished and are, once set, the values used as orders or references within the microcontroller (6), so that the system, as well as reducing the need for wiring in those elements involved in the working of the door, also presents a high degree of versatility in terms of how it works.

## Claims

1. A system for determining the position in automatic doors, which has the aim of controlling the speed with which automatic doors advance or are withdrawn and therefore the manoeuvres of opening and closing, and being of general application in all types of doors, and most particularly those used in railway carriages /wagons, **characterised in that** it is composed by the functional linking of means of reading the voltage by means of a voltage divider (2) associated with a low-pass filter (3), and current by means of a shunt circuit (4) in a direct motor (1), on the basis of which two analogue signals are generated which, by means of analogue /digital converters (5), (5'), are transformed into digital signals, to be compared and processed by a microcontroller (6), which, by means of a program, carries out the calculation of the position of the doors on the basis of the variables read, after which it sends out the orders governing the motor control (7).

2. A system for determining the position in automatic doors, according to claim 1, **characterised in that** the microcontroller (6) undertakes the calculation of the position by integrating a function that is proportional to the speed supplied by the motor at each instant, comparing and correcting the said speed with respect to orders which have been set by the program run by the microcontroller (6).

3. A system for determining the position in automatic doors, according to the above claims, **characterised in that** in each manoeuvre the calculations are corrected, in such a way that variations due to tolerance of electronic components and the particular characteristics of each motor are prevented from arising, to this end taking into account the maximum values of voltage and current, together with the average point of stoppage corresponding to prior manoeuvres, and recording the maximum current at the moment of starting the motor, so that the first manoeuvre is partially foreseen as the resistance of the windings is determined before the first manoeuvre takes place.

4. A system for determining the position in automatic doors, according to claim 2, **characterised in that** internally, the microcontroller (6) carries out all of the calculations involved in integration abandoning natural physical units and thereby simplifying the calculations using mathematical operations which means less time of operation of the microcontroller (6).

## Patentansprüche

1. System zum Bestimmen der Position bei automatischen Türen, das das Ziel hat, die Geschwindigkeit, mit der automatische Türen ausfahren oder eingezogen werden, und daher die Vorgänge des Öffnens und Schließens zu steuern, und das allgemein bei allen Typen von Türen Verwendung findet und insbesondere bei denen, die in Eisenbahnwagen/-waggons eingesetzt werden, **dadurch gekennzeichnet, dass** es durch die funktionelle Verbindung von Einrichtungen zum Messen der Spannung mittels eines Spannungsteilers (2), der mit einem Tiefpassfilter (3) verbunden ist, und des Stroms mittels eines Nebenschlussstromkreises (4) in einem Direktmotor (1) gebildet wird, auf dessen Basis zwei analoge Signale erzeugt werden, die mittels Analog/Digital-Wandlern (5), (5') in digitale Signale umgewandelt werden, die durch einen Mikrocontroller (6) verglichen und verarbeitet werden, der mittels eines Programms die Berechnung der Position der Türen auf Basis der gemessenen Variablen ausführt und anschließend die Befehle aussendet, die die Motorsteuerung (7) steuern.

2. System zum Bestimmen der Position bei automatischen Türen nach Anspruch 1, **dadurch gekennzeichnet, dass** der Mikrocontroller (6) die Berechnung der Position durchführt, indem er eine Funktion integriert, die proportional zu der in jedem Moment durch den Motor erzeugten Geschwindigkeit ist, die Geschwindigkeit vergleicht und unter Berücksichtigung von Befehlen korrigiert, die durch das von dem Mikrocontroller (6) ausgeführte Programm gegeben worden sind.

3. System zum Bestimmen der Position bei automatischen Türen nach den obenstehenden Ansprüchen, **dadurch gekennzeichnet, dass** bei jedem Vorgang die Berechnungen so korrigiert werden, dass das Auftreten von Abweichungen aufgrund der Toleranz elektronischer Bauteile und der speziellen Eigenschaften jedes Motors verhindert wird, wobei zu diesem Zweck die Maximalwerte von Spannung und Strom zusammen mit dem durchschnittlichen Haltepunkt entsprechend vorangehenden Vorgängen berücksichtigt werden und der maximale Strom zum Beginn des Startens des Motors aufgezeichnet wird, so dass der erste Vorgang teilweise vorhergesehen wird, wenn der Widerstand der Wicklungen bestimmt wird, bevor der erste Vorgang stattfindet.

4. System zum Bestimmen der Position bei automatischen Türen nach Anspruch 2, **dadurch gekennzeichnet, dass** intern der Mikrocontroller (6) alle Berechnungen ausführt, die zur Integration gehören, und dabei auf natürliche physikalische Einheiten verzichtet und so die Berechnungen unter Verwendung mathematischer Operationen vereinfacht, wodurch sich die Arbeitszeit des Mikrocontrollers (6) verkürzt.

## Revendications

1. Système permettant de déterminer la position de portes automatiques, qui a pour but de régler la vitesse à laquelle des portes automatiques avancent ou sont retirées et, de ce fait, des manoeuvres d'ouverture et de fermeture, et s'appliquant en général à tous les types de portes, et plus particulièrement à celles utilisées dans des voitures/wagons de chemin de fer, **caractérisé en ce qu'**il est formé par la liaison fonctionnelle de moyens pour lire la tension au moyen d'un diviseur de tension (2) associé à un filtre passe-bas (3), et le courant au moyen d'un circuit shunt (4) dans un moteur direct (1), sur la base desquels deux signaux analogiques sont produits qui, par des convertisseurs analogiques/numériques (5, 5') sont transformés en des signaux numériques, destinés à être comparés et traités par un microrégisseur (6) qui, au moyen d'un programme, exécute le calcul de la position des portes sur la base des variables lues, après quoi il émet des instructions gouvernant la commande du moteur (7).

2. Système pour déterminer la position de portes automatiques selon la revendication 1, **caractérisé en ce que** le microrégisseur (6) exécute le calcul de la position en intégrant une fonction qui est proportionnelle à la vitesse fournie par le moteur à chaque instant, en comparant et en corrigeant ladite vitesse par rapport aux instructions qui ont été données par le programme exécuté par le microrégisseur (6).

3. Système pour déterminer la position de portes automatiques selon les revendications ci-dessus, **caractérisé en ce que** dans chaque manoeuvre, les calculs sont corrigés de telle manière que des variations dues à des tolérances des composants électroniques et aux caractéristiques particulières de chaque moteur ne peuvent pas se produire, en prenant en considération à cette fin les valeurs de tension et de courant, ensemble avec le point d'arrêt moyen correspondant à des manoeuvres antérieures, et en enregistrant le courant maximal au moment du démarrage du moteur de sorte que la première manoeuvre est partiellement prévue étant donné que la résistance des enroulements est déterminée avant que la première manoeuvre n'ait lieu.

4. Système pour déterminer la position de portes automatiques selon la revendication 2, **caractérisé en ce que** intérieurement, le microrégisseur (6) exécute tous les calculs impliqués dans l'intégration en abandonnant les unités physiques naturelles et en simplifiant ainsi les calculs en utilisant des opérations mathématiques ce qui signifie moins de temps de fonctionnement du microrégisseur (6).
